# EUROPÄISCHE PATENTSCHRIFT

(11) **EP 0 716 157 B1**
(45) Veröffentlichungstag und Bekanntmachung des Hinweises auf die Patenterteilung: **31.01.2001**
(21) Anmeldenummer: 95118697.2
(22) Anmeldetag: 28.11.1995
(51) Int. Cl.: C23C 4/04, C23C 6/00, C23C 2/04

(54) **Thermoschutz-Bauelement**
Thermal protection component
Elément à protection thermique

(30) Priorität: 08.12.1994 DE 9419701 U
(43) Veröffentlichungstag der Anmeldung: 12.06.1996
(73) Patentinhaber: FAIST Automotive GmbH & Co. KG, 86381 Krumbach (DE)
(72) Erfinder: Roller, Manfred, Dipl.-Ing.,, D-7908 Niederstotzingen (DE); Lahner, Stefan, Dr. rer. nat., Dipl.-Chemiker, D-86381 Krumbach (DE)
(74) Vertreter: Müller, Hans-Jürgen, Dipl.-Ing.

(56) Entgegenhaltungen:
- EP-A- 0 487 273
- DE-A- 2 044 528
- DE-A- 2 113 177
- DE-A- 2 344 552
- DE-A- 2 641 631
- DE-B- 1 142 260
- GB-A- 852 484
- US-A- 3 274 007
- PATENT ABSTRACTS OF JAPAN vol. 13 no. 457 (C-644) ,16.Oktober 1989 & JP-A-01 176063 (TOYOTA MOTOR COMPANY) 12.Juli 1989,
- PATENT ABSTRACTS OF JAPAN vol. 12 no. 344 (C-528) ,16.September 1988 & JP-A-63 100167 (MITSUBISHI HEAVY IND) 2.Mai 1988,
- DATABASE WPI Derwent Publications Ltd., London, GB; AN 77-83757y c47 & JP-A-52 121 685 (MATSUSHITA ELEC IND) , 13.Oktober 1977
- PATENT ABSTRACTS OF JAPAN vol. 13 no. 190 (C-593) ,8.Mai 1989 & JP-A-01 015354 (SHINAGAWA REFRACT) 19.Januar 1989,
- PATENT ABSTRACTS OF JAPAN vol. 10 no. 230 (C-365) [2286] ,9.August 1986 & JP-A-61 064867 (SHOWA DENKO) 3.April 1986,
- PATENT ABSTRACTS OF JAPAN vol. 9 no. 306 (C-317) ,3.Dezember 1985 & JP-A-60 141857 (TAKAOKA SEISAKUSHO) 26.Juli 1985,
- PATENT ABSTRACTS OF JAPAN vol. 3 no. 65 (M-061) ,6.Juni 1979 & JP-A-54 042044 (MATSUSHITA ELECTRIC) 3.April 1979,

## Beschreibung

Die Erfindung bezieht sich auf ein Thermoschutz-Bauelement mit einer metallischen Trägerplatte und einer keramischen Beschichtung nach dem Oberbegriff des Patentanspruches 1.

Verfahren zur Herstellung poröser keramischer Beschichtungen sind aus den JP-A-63 100 167 oder JP-A-1 015 354 bekannt. Verfahren zum Aufbringen poröser keramischer Beschichtungen auf Oberflächen metallischer Körper sowie entsprechende Bauelemente aus einem metallischen Körper mit einer porösen keramischen Beschichtung, wie beispielsweise beschichtete Kolben eines Verbrennungsmotors oder Schutzbeschichtungen für wärmebeanspruchte Metallteile (Dampfleitungsrohre, Kesselteile) sind aus den JP-A-1 176 063, JP-A-52 121 685, DE-A-2 044 528, DE-A-2 344 552, DE-A-2 113 177, DE-A-1 142 260, GB-A-852 484, JP-A-60 141 857 oder JP-A-54 042 044 bekannt.

Thermisch isolierende Spritzmaterialien aus Keramik sind aus EP-A1-0 487 273 und JP-A-6 164 867 bekannt.

Thermoschutz-Bauelemente sind bereits bekannt (US 3 274 007 und DE-A-2 641 631) und werden insbesondere als Hitzeschild zum Abschirmen der Ausbreitung großer Hitze von der einen Seite des Thermoschutz-Bauelements zur anderen verwendet. Aus der DE-A-2 641 631 und der GB-A-852 484 ist bekannt, wie man Poren in fülligen Keramikkörper in kontrollierter Weise herstellt. Das anteilige Auffüllen dieser Poren mit nicht ausbrennbaren Bindemitteln und/oder Füllstoffen ist aus der DE-A-2 641 631, der EP 0 487 273 A1 und der "Ullmanns Encyklopädie der technischen Chemie", Dritte Auflage, 1966, 17. Band, Seiten 569 - 574 bekannt.

Aus der DE-OS 42 38 369 ist eine metallische Trägerplatte einerseits und eine keramische Beschichtung andererseits bekannt, die meistens sehr unterschiedliche thermische Ausdehnungskoeffizienten aufweisen. Zur Vermeidung des Absplitterns der keramischen Beschichtung von der Trägerplatte ist die letztgenannte bei dem bekannten Bauelement mit von der Oberfläche der Trägerplatte abstehenden Stegen und an den Übergangsstellen zwischen der Trägerplatten-Oberfläche und den Seitenwänden der Stege mit muldenförmigen Einlagen aus beispielsweise Lotmaterial versehen, um das in diesen Kammern aufgenommene Material der keramischen Beschichtung auch bei größeren Temperaturunterschieden festzuhalten und am Abplatzen zu hindern. Der Nachteil dieser Ausbildung besteht einerseits im hohen Herstellungsaufwand, andererseits aber auch in der verhältnismäßig großen Bautiefe, weshalb sich derartige teuere Thermoschutz-Bauelemente oftmals in solchen Räumen nicht einsetzen lassen, in denen gerade wegen großer Raumnot der Einbau eines dünnwandigen Hitzeschildes erforderlich ist, um die Hitzeausbreitung von einem in den anderen Raum zu verhindern.

Der Erfindung liegt die Aufgabe zugrunde, Thermoschutz-Bauelemente der eingangs genannten Gattung mit einfachen Mitteln dahingehend zu verbessern, daß trotz niedrigem Herstellungsaufwand und verhältnismäßig geringer Gesamtdicke der Gefahr des Absplitterns von keramischen Beschichtungsteilen von der Trägerplatte auch bei größeren Temperaturunterschieden gut begegnet ist.

Die Erfindung ist im Anspruch 1 gekennzeichnet und in Unteransprüchen sind weitere Ausbildungen beansprucht.

Erfindungsgemäß wird für die keramische Beschichtung kein Kompaktmaterial aus keramischen Werkstoffen verwendet, sondern ein mit Bindemitteln und/oder Füllstoffen bzw. anderen Hilfsstoffen versetztes Material, das jedenfalls bei Beendigung des Herstellungsverfahrens oder sogar erst nach den ersten Hitzebeaufschlagungen am Ort der endgültigen Installierung z.B. als Teil-Verkleidung eines Verbrennungsmotors die keramische Beschichtung bildet. Durch die Verwendung eines Gemisches aus dem die keramische Beschichtung bildenden Material und im wesentlichen faserfreien Bindemitteln und/oder nichtkeramischen Füllstoffen bzw. Hilfsmitteln und Auftragen dieser Mixtur insbesondere durch Eintauchen der metallischen Trägerplatte in dieses Gemisch (Tauchbadverfahren) oder durch Anwendung des Schlickergußverfahrens, d.h. Aufgießen des Gemisches auf die Trägerplatte, oder durch Plasmaspritzen und gegebenenfalls anschließendes Wärmebehandeln bis z.B. 250 °C entsteht eine keramische Masse, welche bereits soweit abgebunden ist, daß sie genügend große Festigkeit aufweist, andererseits aber genügend elastisch ist, um beim Auftreten von Spannungen nicht zu reißen oder gar abzublättern. Die Hohlräume in der Masse sind mit Bindemitteln bzw. Füll- oder Hilfsstoffen mindestens teilweise gefüllt. Hierdurch werden die internen Spannungen in der keramischen Beschichtung bei starkem Temperaturwechsel besser ausgeglichen, ohne daß ganze Beschichtungsteile von der metallischen Trägerplatte abblättern und die technische Wirkung des Hitzeschilds verlorengeht. Dennoch wird die thermische Isolierungseigenschaft der keramischen Beschichtung nicht beeinträchtigt; im Gegenteil wurde festgestellt, daß insbesondere bei einem Anteil von etwa 10 bis 90 % Poren, insb. zwischen 70 und 90 % Poren bzw. Bindemitteln und/oder Füllstoffen an der keramischen Beschichtung ein noch höherer Widerstand gegen Hitzeübertragung von einer Seite auf die andere Seite der keramischen Beschichtung und daher auch des Thermoschutz-Bauelements um etwa 5 bis 10 % erreicht wird.

Dieser unerwartete Vorteil bietet die Möglichkeit, die Dicke bzw. Wandstärke des gesamten Thermoschutz-Bauelements vergleichsweise gering zu halten. Schichtdicken der keramischen Beschichtung zwischen 0,5 und 10 mm, insbesondere zwischen 1 und 4 mm reichen für die meisten Anwendungszwecke aus, so daß sich die Erfindung besonders gut zur Anwendung im Kraftfahrzeugbau eignet und sogar einen nachträglichen Einbau im Motorraum von Kraftfahrzeugen an solchen Stellen ermöglicht, an denen nur noch freie Verbauräume zwischen etwa 3 und 10 mm zur Verfügung stehen. Die Kombination des verhältnismäßig porösen keramischen Mikrogefüges mit der beispielsweise aus Stahlblech oder Aluminiumfolie bestehenden metallischen Grundplatte ist daher dem vorbekannten wesentlich teueren Thermoschutz-Bauelement überlegen, obwohl die Herstellung wesentlich einfacher erfolgen kann.

Das poröse keramische Mikrogefüge kann auch ausgesprochene Hohlräume aufweisen, die beispielsweise durch Verbrennen und Vergasen von organischem Material entstehen, die als faserfreie Bindemittel bzw. Füllstoffe für die Herstellung der keramischen Beschichtung im Gemisch mit deren Ausgangsmaterial verwendet werden. Die Oberfläche des Mikrogefüges an der der Trägerplatte abgewandten Seite weist entsprechend zahlreiche Unebenheiten in Form kleiner Trichter und Furchen auf, ohne daß hierdurch die Wirksamkeit des erfindungsgemäßen Bauelements beeinträchtigt wird.

Nach dem Auftragen der Beschichtung braucht diese noch nicht hart zu sein, was eine gewisse Sprödigkeit zur Folge hätte. Statt dessen reicht es aus, wenn der Beschichtungsauftrag zwar nicht mehr ausgesprochen teigig ist, aber so elastisch bzw. elastomer wirkt, daß beim Transport und bei der Montage keine Risse entstehen. Die endgültige keramische Struktur kann daher erst am Ort des Einsatzes nach der ersten Hitzebeaufschlagung bei Temperaturen oberhalb etwa 350 °C entstehen. Die eigentliche keramische Mikrostruktur tritt dann erst im Anwendungsfall auf. Dennoch wird die thermische Isolierungseigenschaft der keramischen Beschichtung nicht beeinträchtigt; im Gegenteil wurde festgestellt, daß insbesondere bei einem Anteil von 40 bis 80 % Poren bzw. Bindemitteln und/oder Füllstoffen an der keramischen Beschichtung ein noch höherer Widerstand gegen Hitzeübertragung von einer Seite auf die andere Seite der keramischen Beschichtung und daher auch des Thermo-Bauelements um etwa 5 bis 10 % erreicht wird.

Ausführungsbeispielse der Erfindung werden im folgenden anhand der Zeichnung beschrieben. Dabei zeigen:
- Fig. 1: einen schematischen Querschnitt durch einen Teil eines erfindungsgemäßen Thermoschutz-Bauelements;
- Fig. 2: einen vergrößerten Teilauschnitt aus einem Bereich des in Fig. 1 gezeigten Bauelements und
- Fig. 3: einen schematischen Querschnitt durch ein wannenförmiges als Hitzeschutzschild dienendes Bauelement gemäß der Erfindung.

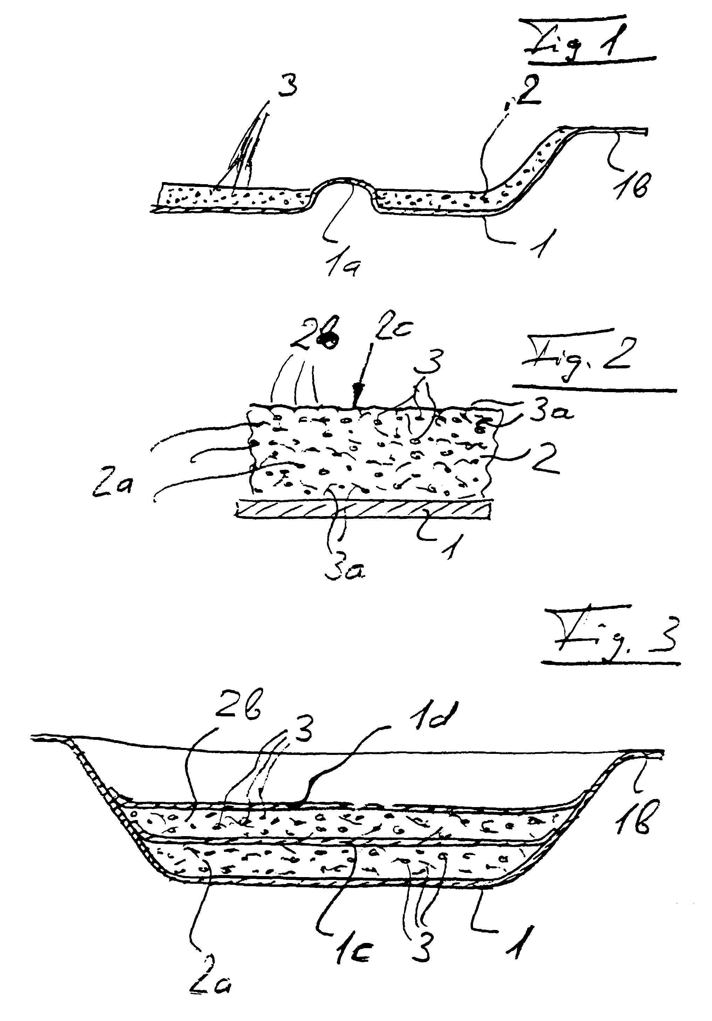

Nach Fig. 1 ist die aus Stahl- oder Aluminiumblech einer Schichtdicke von z.B. 0,5 mm bestehende Trägerplatte 1 im Tiefziehverfahren in eine Wannenform gebracht, die am Bodenteil mit einer nach innen ragenden napfartigen Erhöhung la versehen ist, damit an der betreffenden Außenseite der Schraubbolzen eines im Einbau benachbarten Elementes Platz findet und die Gesamtbauhöhe B des Thermoschutz-Bauelements entsprechend geringer gehalten werden kann. Im Bereich außerhalb der napfförmigen Erhöhung la ist die Trägerplatte 1 im Innenbereich der Wanne mit der keramischen Beschichtung 2 überzogen, während der Rand 1b der aus dieser Ebene herausgeformten Trägerplatte 1 keine keramische Beschichtung 2 aufweist. Hierdurch wird vermieden, daß sich die Bauhöhe B über das in Fig. 1 gezeigte Maß erhöht, zumal das Bauelement am Rand 1b an beispielsweise Halteorgangen im Kraftfahrzeug befestigt wird, ohne daß dort eine Hitzschildfunktion erforderlich ist.

Gemäß Fig. 2 wird die Mikrostruktur der keramischen Beschichtung 2 mit Poren 2a und trichterförmigen Öffnungen 2b an der Außenseite 2c deutlich. Dabei können sämtliche Poren 2a mit faserfreien oder zumindest faserarmen Füllstoffen 3 aus beispielsweise Kreide und Glimmer, aber auch Hohlkörpern, wie Aluminiumsilikaten, ausgefüllt sein. Bei vielen Anwendungsfällen können die Poren 2a jedoch im wesentlich auch frei von solchen Bindemitteln bzw. Füllstoffen 3 werden, wenn das Ausgangsmaterial für die keramische Beschichtung 2 nach dem "Brennen" seine keramischen Eigenschaften und die Mikrostruktur eingenommen hat. In diesem Fall sind die organischen bzw. anorganischen Füllstoffe 3 lediglich Hilfsstoffe, welche beim "Brennen" die Ausbildung der Mikrostruktur und deren Poren ermöglichen, aber danach keine weiteren Aufgaben haben. Ebenfalls können die zum Zusammenhalten der Ausgangsteilchen z.B. zum Anteigen dienenden Bindemittel bei der Bildung der Beschichtung verbrennen, da sie nach der Herstellung vielfach keine Bindeeigenschaften mehr übernehmen müssen.

Für einige Anwendungsfälle ist es jedoch zweckmäßig, wenn Bindemittel faserförmig ausgebildet sind und in der keramischen Beschichtung 2 verbleiben. Derartige Bindemittelfasern 3a halten die keramische Beschichtung 2 selbst dann besser zusammen, wenn in dieser Risse entstehen würden. Auch Fasern aus keramischem Material oder Carbonfasern können zusätzlich verwendet werden.

Gemäß Fig. 3 ist das als Hitzeschild dienende wannenförmige Bauelement als Laminat aufgebaut, bei dem auf dem Boden der wannenförmig geformten metallischen Trägerplatte 1 eine erste keramische Beschichtung 2a, darauf eine metallische Zwischenschicht 1c (an den Rändern mit der Trägerplatte 1 verschweißt), darüber eine zweite keramische Beschichtung 2b und auf dieser eine metallische Abdeckung 1d (wiederum am Rand mit der metallischen Trägerplatte 1 verschweißt) angeordnet sind. Es versteht sich, daß der freie Raum innerhalb des wannenförmigen Bauelements oberhalb der Abdeckplatte ld in Fig. 3 mit einer weiteren keramischen Beschichtung versehen sein kann, ohne daß sich hierdurch die gesamte Bauhöhe vergrößert.

Ein weiterer Vorteil des erfindungsgemäßen Bauelements besteht darin, daß es ohne Umweltbeeinträchtigung leicht recycelbar ist und insofern auch Wünschen des Umweltschutzes besser entspricht. Zu diesem Zweck empfiehlt es sich, etwaige faserförmige Füllstoffe 3a aus Aluminiumoxid- und/oder Siliziumoxidfasern zu verwenden, damit nicht solche Beeinträchtigungen erfolgen, die bekanntermaßen bei der Verwendung von Asbestfasern auftreten.

Die Beschichtung (mit Ausnahme der Hohlräume und Bindemittel bzw. Füllstoffe) sollte in Gewichtsprozent insb. mehr als 50 % Kieselsäure aufweisen; Anteile zwischen 50 und 85 % werden bevorzugt. Aluminiumoxid sollte zwischen etwa 5 und 18 % beteiligt sein. Ferner sind auch Anteile von bis zu etwa 15 %, insb. 1 - 12 % Natriumoxid und bis zu etwa 10 %, insb. 1 - 8 % Kaliumoxid empfehlenswert. Die Biegefestigkeit sollte zwischen 0,4 und 1,0 N/mm² betragen.

Das erfindungsgemäße Thermoschutz-Bauelement wird bevorzugt in Fahrzeugen, wie Kraftwagen, Schiffen und Eisenbahnwagen, aber auch im Maschinenbau und an solchen Stellen verwendet, bei denen Explosionsgefahr bei hohen Temperaturen besteht.

## Patentansprüche

1. Thermisch isolierendes Bauelement, verwendbar als Hitzeschild gegen Hitzeausbreitung von einer zur entgegengesetzten Seite des Bauelements, mit einer metallischen Trägerplatte (1) und einer keramischen Beschichtung (2) an mindestens einer Oberfläche der Trägerplatte (1), wobei die keramische Beschichtung (2) im wesentlichen faserfreie Bindemittel und/oder Füllstoffe (3) aufweist,
**dadurch gekennzeichnet**,
daß die keramische Beschichtung (2) eine Schichtdicke von zwischen 0,5 mm und 10 mm aufweist,
daß die keramische Beschichtung (2) Hohlräume mit einem Anteil von 40% bis 80% aufweist, die mindestens teilweise mit den Bindemitteln und/oder Füllstoffen (3) gefüllt sind, und
daß die keramische Beschichtung im wesentlichen folgende Zusammensetzung in Gew% aufweist:
| | |
|---|---|
| 50 - 85% | SiO₂ |
| 5 - 18% | Al₂O₃ |
| 1 - 12% | Na₂O |
| 1 - 8% | K₂O. |

2. Bauelement nach Anspruch 1,
dadurch gekennzeichnet,
daß Bindemittel und/oder Füllstoffe (3) organische Materalien aufweisen und/oder aus solchen bestehen.

3. Bauelement nach einem der Ansprüche 1 oder 2,
dadurch gekennzeichnet,
daß Bindemittel und/oder Füllstoffe (3) anorganische Materialien aufweisen und/oder aus solchen bestehen.

4. Bauelement nach einem der vorhergehenden Ansprüche,
dadurch gekennzeichnet,
daß die keramische Beschichtung (2) eine schwammartige Mikrostruktur aufweist, in deren Poren sich Bindemittel und/oder Füllstoffe (3) befinden.

5. Bauelement nach einem der vorhergehenden Ansprüche,
dadurch gekennzeichnet,
daß die Poren des Mikrogefüges der keramischen Beschichtung (2) weitgehend frei sind von Bindemitteln und/oder Füllstoffen.

6. Bauelement nach einem der vorhergehenden Ansprüche,
gekennzeichnet,
durch eine Schlickergußausbildung der keramischen Beschichtung (2).

7. Bauelement nach einem der vorhergehenden Ansprüche,
gekennzeichnet,
durch einen Tauchbadauftrag der keramischen Beschichtung (2).

8. Bauelement nach einem der vorhergehenden Ansprüche,
gekennzeichnet,
durch eine plasmagespritzte keramische Beschichtung (2).

9. Bauelement nach einem der vorhergehenden Ansprüche,
gekennzeichnet,
durch eine Laminatausbildung, bei der auf der metallischen Trägerplatte (1) keramische Beschichtungen (2a, 2b) und metallische Schichten (1c, 1d) miteinander abwechseln.

10. Bauelement nach einem der vorhergehenden Ansprüche,
dadurch gekennzeichnet,
daß die metallische Trägerplatte (1) aus einer planen Ebene verformt ist.

11. Bauelement nach einem der vorhergehenden Ansprüche,
dadurch gekennzeichnet,
daß eine keramische Beschichtung (2) eine Biegefestigkeit zwischen 0,4 und 1,0 N/mm² aufweist.

12. Bauelement nach einem der vorhergehenden Ansprüche,
dadurch gekennzeichnet,
daß die keramische Beschichtung (2) nur geringe Wasseraufnahmefähigkeit hat.

13. Bauelement nach einem der vorhergehenden Ansprüche,
dadurch gekennzeichnet,
daß die keramische Beschichtung (2) mit einem dünnen oberflächlichen Überzug versehen ist.

14. Bauelement nach einem der vorhergehenden Ansprüche,
dadurch gekennzeichnet,
daß die Trägerplatte (1) als Fahrzeugteil ausgebildet ist.

15. Bauelement nach Anspruch 14,
dadurch gekennzeichnet,
daß die Trägerplatte (1) als Schutzschirm oder Verkleidungsteil eines Kfz-Verbrennungsmotors ausgebildet ist.

16. Bauelement nach Anspruch 14,
dadurch gekennzeichnet,
daß die Trägerplatte (1) als Schutzschirm eines Kfz-Abgasstranges ausgebildet ist.

17. Bauelement nach Anspruch 14,
dadurch gekennzeichnet,
daß die Trägerplatte (1) als Schutzschirm von wärmeempfindlichen Baugruppen in Kfz-Motoräumen ausgebildet ist.

## Claims

1. Thermally insulating constructional element, usable as a thermal shield against the spread of heat from one side of the constructional element to the opposite side thereof, said element including a metallic carrier plate (1) and a ceramic coating (2) on at least one surface of the carrier plate (1), the ceramic coating (2) having substantially fibre-free bonding agents and/or fillers, characterised in that the ceramic coating (2) has a layer thickness of between 0.5 mm and 10 mm, in that the ceramic coating (2) has cavities over 40 % to 80 % of its area, which cavities are filled at least partially with the bonding agents and/or fillers (3), and in that the ceramic coating substantially has the following composition in % by wt.:
| | |
|---|---|
| 50 - 85% | SiO₂ |
| 5 - 18% | Al₂O₃ |
| 1 - 12% | Na₂O |
| 1 - 8% | K₂O. |

2. Constructional element according to claim 1, characterised in that bonding agents and/or fillers (3) include organic materials and/or are formed from such.

3. Constructional element according to one of claims 1 or 2, characterised in that bonding agents and/or fillers (3) include inorganic materials and/or are formed from such.

4. Constructional element according to one of the preceding claims, characterised in that the ceramic coating (2) has a spongy microstructure with bonding agents and/or fillers (3) situated in the pores thereof.

5. Constructional element according to one of the preceding claims, characterised in that the pores of the of bonding agents and/or fillers.

6. Constructional element according to one of the preceding claims, characterised by a slip-cast form of the ceramic coating (2).

7. Constructional element according to one of the preceding claims, characterised by an immersion bath application of the ceramic coating (2).

8. Constructional element according to one of the preceding claims, characterised by a plasma-injected ceramic coating (2).

9. Constructional element according to one of the preceding claims, characterised by a laminate form, wherein ceramic coatings (2a, 2b) and metallic layers (1c, 1d) alternate with one another on the metallic carrier plate (1).

10. Constructional element according to one of the preceding claims, characterised in that the metallic carrier plate (1) is deformed from a planar plane.

11. Constructional element according to one of the preceding claims, characterised in that a ceramic coating (2) has a bending resistance of between 0.4 and 1.0 N/mm².

12. Constructional element according to one of the preceding claims, characterised in that the ceramic coating (2) has only minimal water absorbency.

13. Constructional element according to one of the preceding claims, characterised in that the ceramic coating (2) is provided with a thin surface covering.

14. Constructional element according to one of the preceding claims, characterised in that the carrier plate (1) is configured as a vehicle part.

15. Constructional element according to claim 14, characterised in that the carrier plate (1) is configured as a protective screen or cover part for an automotive vehicle internal combustion engine.

16. Constructional element according to claim 14, characterised in that the carrier plate (1) is configured as a protective screen for an automotive vehicle exhaust pipe.

17. Constructional element according to claim 14, characterised in that the carrier plate (1) is configured as a protective screen for heat-sensitive assemblies in automotive vehicle engine compartments.

## Revendications

1. Composant à isolation thermique, pouvant être utilisé comme écran thermique contre la propagation de chaleur d'un côté du composant au côté opposé, comportant une plaque de support métallique (1) et un revêtement céramique (2) sur au moins une surface de la plaque de support (1), le revêtement céramique (2) comportant des liants sensiblement sans fibres et/ou des charges (3), caractérisé
en ce que le revêtement céramique (2) présente une épaisseur de couche comprise entre 0,5 mm et 10 mm,
en ce que le revêtement céramique (2) présente des cavités à raison de 40 % à 80 %, qui sont remplies au moins partiellement avec les liants et/ou les charges (3), et en ce que le revêtement céramique présente sensiblement la composition suivante en % en poids :
50 à 85 % de SiO₂
5 à 18 % de Al₂O₃
1 à 12 % de Na₂O,
1 à 8% de K₂O.

2. Composant selon la revendication 1, caractérisé en ce que les liants et/ou les charges (3) comportent des matières organiques et/ou sont composés de ces matières organiques.

3. Composant selon l'une des revendications 1 ou 2, caractérisé en ce que les liants et/ou les charges (3) comportent des matières inorganiques et/ou sont composés de ces matières inorganiques.

4. Composant selon l'une des revendications précédentes, caractérisé en ce que le revêtement céramique (2) présente une microstructure du type éponge dans les pores de laquelle se trouvent les liants et/ou les charges (3).

5. Composant selon l'une des revendications précédentes, caractérisé en ce que les pores de la microstructure du revêtement en céramique (2) sont presque totalement exempts de liants et/ou de charges.

6. Composant selon l'une des revendications précédentes, caractérisé en ce que le revêtement céramique (2) se présente sous la forme d'une barbotine.

7. Composant selon l'une des revendications précédentes, caractérisé par l'application par immersion du revêtement céramique (2).

8. Composant selon l'une des revendications précédentes, caractérisé par un revêtement céramique (2) projeté au plasma.

9. Composant selon l'une des revendications précédentes, caractérisé par une réalisation stratifiée dans laquelle des revêtements céramiques (2a, 2b) et des couches métalliques (1c, 1d) alternent sur la plaque de support métallique (1).

10. Composant selon l'une des revendications précédentes, caractérisé en ce que la plaque de support métallique (1) est formée dans un plan.

11. Composant selon l'une des revendications précédentes, caractérisé en ce qu'un revêtement céramique (2) présente une résistance à la flexion comprise entre 0,4 et 1,0 N/mm².

12. Composant selon l'une des revendications précédentes, caractérisé en ce que le revêtement céramique (2) ne présente qu'un faible pouvoir d'absorption de l'eau.

13. Composant selon l'une des revendications précédentes, caractérisé en ce que le revêtement céramique (2) est pourvu d'une mince couche de couverture superficielle.

14. Composant selon l'une des revendications précédentes, caractérisé en ce que la plaque de support (1) est réalisée en tant qu'élément de véhicule.

15. Composant selon la revendication 14, caractérisé en ce que la plaque de support (1) est réalisée en tant qu'écran de protection ou élément de revêtement d'un moteur à combustion interne d'un véhicule automobile.

16. Composant selon la revendication 14, caractérisé en ce que la plaque de support (1) est réalisée en tant qu'écran de protection d'une ligne des gaz d'échappement d'un véhicule automobile.

17. Composant selon la revendication 14, caractérisé en ce que la plaque de support (1) est réalisée en tant qu'écran de protection d'ensembles sensibles à la chaleur dans des enceintes de moteurs de véhicules automobiles.
